Europäisches Patentamt

European Patent Office

Office européen des brevets

(11) Publication number: **0 227 269 B1**

## EUROPEAN PATENT SPECIFICATION

(45) Date of publication of patent specification: **05.02.92**  (51) Int. Cl.⁵: **C03C 3/068**

(21) Application number: **86308573.4**

(22) Date of filing: **04.11.86**

(54) Optical and ophthalmic glasses.

(30) Priority: **29.11.85 FR 8517658**
**20.06.86 US 876933**

(43) Date of publication of application:
**01.07.87 Bulletin 87/27**

(45) Publication of the grant of the patent:
**05.02.92 Bulletin 92/06**

(84) Designated Contracting States:
**CH DE ES FR GB IT LI NL**

(56) References cited:
**GB-A- 2 023 128**
**US-A- 3 536 504**

**CHEMICAL ABSTRACTS, vol. 82, no. 4, 27th
January 1975, page 288, abstract no.21004n,
Columbus, Ohio, US; & JP-A-74 72 310
(MINOLTA CAMERA CO. LTD) 12-07-1974**

**CHEMICAL ABSTRACTS, vol. 95, no. 26, de-
cember 1981, page 288, abstract no.
224320d, Columbus, Ohio, US; & JP-A-81 78
447 (MINOLTA CAMERA CO. LTD) 27-06-1981**

(73) Proprietor: **Corning Glass Works
Houghton Park
Corning New York 14831(US)**

(72) Inventor: **Boudot, Jean Emile
2 rue du Haut Changis
Avon(FR)**
Inventor: **Prassas, Michel Corning Europe Inc.
7bis, Av. de Valvins, B.P.3
F-77211 Avon, Cedex(FR)**
Inventor: **Mazeau, Jean-Pierre
Les pres de Vilaines
Avon(FR)**

(74) Representative: **Smith, Sydney et al
Elkington and Fife Prospect House 8 Pem-
broke Road
Sevenoaks, Kent TN13 1XR(GB)**

## Description

The present invention is concerned with glasses for the fabrication of lenses for optical and/or ophthalmic applications, the glasses having an index of refraction ($n_d$) between about 1.79-1.81, an Abbe number ($\nu_d$) greater or equal to 33, and density ($\rho$) less than or equal to about 3.75 g/cm$^3$.

For eyeglasses of high correction, the use of a glass having an index of refraction of 1.8 permits, when compared to glasses having lower indices of refraction (1.6-1.7) and of equal correction power, a significant reduction in thickness at the edge (in lenses of negative power) and at the center (in lenses of positive power).

This constitutes an undeniable advantage for the wearer of eyeglasses, particularly in those cases of high corrections (>6 diopters). In other respects, it is known that an increase in the index of refraction is generally accompanied by a degradation of other characteristic properties of a glass; in particular, the density commonly increases. In order that a glass of high index can retain the advantages in comfort mentioned above, it will be necessary that its density not be too high.

Another drawback often associated with an increase in the index is an increase in the dispersion (or a decrease in the Abbe number).

Summary of the Invention

The object of the invention is to produce glasses of low dispersion complying with the criteria stated above. In other respects, the glasses exhibit excellent chemical durability (a weight loss following the American Optical test of <0.2 mg/cm$^2$) and a transmission at 400 nm in a thickness of 2 mm greater than or equal to 78%.

The inventive glasses exhibit a liquidus temperature which is less than 1300°C and, preferably, less than 1180°C. The viscosity at this temperature is several tens of poises.

More particularly, the invention is concerned with a glass having the following chemical composition, expressed in terms of weight percent on the oxide basis, of:

| | | | |
|---|---|---|---|
| $SiO_2$ | 21-30 | BaO | 0-5 |
| $B_2O_3$ | 2-10 | $MgO + CaO + SrO + BaO$ | 18-30 |
| $SiO_2 + B_2O_3$ | 24-33 | ZnO | 0-5 |
| $Al_2O_3$ | 0-3 | $La_2O_3$ | 18-22 |
| $Li_2O + Na_2O + K_2O$ | 0-5 | $ZrO_2$ | 1-5 |
| MgO | 0-3 | $Nb_2O_5$ | 6-15 |
| CaO | 15-23 | $TiO_2$ | 5-13 |
| SrO | 0-5 | Other oxides | 0-5 |

Observance of the above-mentioned ranges of constituents for the glasses is very important in order to obtain the physical and chemical properties required for the envisaged application.

In particular, when $B_2O_3$ replaces $SiO_2$, the viscosity at the liquidus is reduced and the chemical durability is degraded. The maximum content of $B_2O_3$ should not exceed 10%. A minimum content of $B_2O_3$ appears to be necessary, however, in order to reduce the tendency of these glasses to opalize. This content is about 2% by weight.

Furthermore, the sum of the glass forming oxides $SiO_2$ and $B_2O_3$ should not be greater than 33% by weight. Beyond this limit, the index of refraction decreases and the tendency of the glass to devitrify is considerably increased.

$Al_2O_3$ increases the viscosity and improves the durability of the glass. On the other hand, it increases the tendency toward devitrification if it is present in amounts greater than 3.0% by weight.

The alkali metal oxides $Li_2O$, $Na_2O$, and $K_2O$, although making only a small contribution to the density of the glass, will only be used in small proportions. In fact, added in large amounts, they decrease the viscosity of the glass (especially $Li_2O$), increase the tendency for phase separation and/or devitrification, and degrade the chemical durability.

Among the bivalent oxides, MgO exhibits the same advantages and drawbacks as the alkali metal oxides. Moreover, its contribution to the index, although greater than that of $Li_2O$, $Na_2O$ and $K_2O$, is nevertheless, small when compared with the other bivalent oxides. Therefore, the maximum amount of MgO should not exceed 3 % by weight.

ZnO, SrO, BaO and CaO are among the bivalent oxides exercising a medium contribution to the index.

However, when the first three are added to the glass in amounts greater than 5% by weight, the density and also the dispersion are considerably increased.

CaO allows this drawback to be palliated. Therefore, its content should comprise between 15-23% by weight. When a combination of the oxides MgO, CaO, SrO and BaO is utilized, their sum should satisfy the following condition:

$$18\% \leq MgO + CaO + SrO + BaO \leq 30\%$$

Among the other oxides exercising a strong contribution to the index of refraction, such as $TiO_2$, $Nb_2O_5$, $ZrO_2$, and $La_2O_3$, $La_2O_3$ is the one which exhibits the best compromise between index and dispersion. Therefore, it should be present in the glass in an amount of at least 18% by weight. In fact, below this limit, the contribution to the refractive index will be effected either with a considerable decrease in the transmission and in the Abbe number ($TiO_2$), or with an increase in the tendency toward devitrification ($CaO$, $ZrO_2$), or with an excessive increase in the price of the composition ($Nb_2O_5$). Its content will be limited, nevertheless, to 22% by weight because, beyond that amount, the addition of $La_2O_3$ becomes harmful for the density and for the devitrification tendency of the glass.

$TiO_2$ is the constituent which offers the best compromise between density and refractive index. However, used in a great amount it decreases the visible transmission of the glass, increases the devitrification tendency of the glass, and rapidly reduces the Abbe number. Therefore, its content will not exceed 13% by weight.

$ZrO_2$ increases the index of refraction and the density of the glass, but reduces the Abbe number less rapidly then $TiO_2$. Furthermore, this oxide improves the alkali durability of the glass. Its amount will be limited to 5 % by weight. Beyond that, crystallization becomes significant.

In order to avoid the limitations due to the use of $TiO_2$ and $ZrO_2$, the glass should contain at least 6 % by weight $Nb_2O_5$. That oxide increases the index of refraction more rapidly than $ZrO_2$ and reduces the Abbe number nearly two times more slowly than $TiO_2$. Its maximum amount will not exceed 15% by weight because, beyond that amount, devitrification of the glass becomes significant and, above all, the price of the glass becomes prohibitive.

U.S. Patents 3,503,764, 3,877,953, 3,999,997, 4,057,435, 4,084,978, 4,213,786, 4,390,638, 4,400,473 and 4,404,290 are believed to represent the background of the state of the art.

In addition the following disclosures are acknowledged.

In GB-A-2,023,128 there are disclosed glasses consisting (in % by weight) of:

| | |
|---|---|
| $SiO_2$ | 15-20 |
| $B_2O_3$ | 10-20 |
| CaO | 8-15 |
| $La_2O_3$ | 16-26 |
| $TiO_2$ | 15-25 |
| $SiO_2+B_2O_3$ | 30-40 |
| Alkaline earth metal oxides | 20-25 (BaO≤8% by wt) |
| MgO | 0-3 ) |
| SrO | 1.0-10) 8-15 |
| BaO | 0-8 ) |
| ZnO | 0-4 |
| PbO | 0-2 |
| $Al_2O_3$ | 0-2 |
| $ZrO_2$ | 0-3 |
| $Nb_2O_5$ | 1-5 |
| $Ta_2O_5$ | 0-2 |
| Alkali metal oxides | 0-5 |
| $P_2O_5$ | 0-3 |
| $GeO_2$ | 0-3 |

In EP-A-99736, there is disclosed an optical glass characterized in that it exhibits a refractive index of from 1.695 to 1.705, a dispersive index of from 40.5 to 43.2, a density below 3.2 g/cm$^3$, a weight loss as measured in the AO test of less than 0.15 mg/cm$^2$ and a transmittance at 400 nm in 10 mm thickness of at least 75% and it comprises, expressed in terms of weight percent on the oxide basis, from 16 to 21.5 % CaO, from 6 to 15 % $La_2O_3$, from 3.5 to less than 9% $TiO_2$, from 5.5 to 12 % $Al_2O_3$, from 3 to 11 % $Nb_2O_5$, from 2 to 10 % $ZrO_2$, from 20.5 to 25 % $B_2O_3$ and from 16 to 20 % $SiO_2$.

Description of Preferred Embodiments

The invention is further illustrated through the non-limiting examples reported in the table below. The preferred example is No. 23. All proportions of the glass constituents are given in terms of weight percent on the oxide basis.

Examples of Glass Preparation

The various constituents of the glass are provided by the batch materials specified below:

4

| Oxides | Batch Materials |
|--------|-----------------|
| $SiO_2$ | Quartz |
| $B_2O_3$ | $B(OH)_3$ |
| $Al_2O_3$ | $Al(OH)_3$ |
| $Li_2O$ | $Li_2CO_3$ |
| $Na_2O$ | $Na_2CO_3, NaNO_3$ |
| $K_2O$ | $K_2CO_3, KNO_3$ |
| $MgO$ | $MgCO_3$ |
| $CaO$ | $CaCO_3, Ca(NO_3)_2$ |
| $BaO$ | $BaCO_3, Ba(NO_3)_2$ |
| $ZnO$ | $ZnO$ |
| $La_2O_3$ | $La_2O_3$ |
| $Nb_2O_5$ | $Nb_2O_5$ |
| $ZrO_2$ | $ZrO_2$ |
| $TiO_2$ | $TiO_2$ |

The batch materials selected will preferably contain a minimal amount of transition metals, in particular $Fe_2O_3$, in order to insure that the glass obtained exhibits a transmission at 400 nm within the limits defined in the preceding paragraphs.

After weighing, the various batch materials were mixed together in accordance with conventional techniques. The batch was then charged into a platinum crucible and the crucible introduced into a furnace operating at about 1300° C. When the batch was completely melted, the temperature of the furnace was raised to about 1350°-1400° C to achieve homogenization and fining of the melt. The melt was then cooled to a temperature corresponding to a viscosity adequate for forming and cast in the form of a bar.

The total time of the operation was on the order of 2-7 hours. After forming, the glass was annealed at about 700°-750° C with a rate of cooling of 60° C/hour, and the properties thereof were determined as described in the following paragraph.

Measurements of the Physical and Chemical Properties of the Glasses

The measurements of refractive index ($n_d$) and the Abbe number ($\nu_d$)) were carried out according to conventional methods (for $n_d$, the yellow line of He was used) on the annealed samples. The density ($\rho$) was measured through the immersion method and expressed in g/cm³.

Chemical resistance was evaluated through the A.O. test (A.O.) described in the magazine "Applied Optics", 7, No. 5, page 847, May 1968. It consists in determining the loss of weight of a polished sample after immersion for 10 minutes in a bath of an aqueous 10% HCl solution operating at 25° C. Weight loss is expressed in terms of mg/cm².

The liquidus temperature (Liq.) was determined with the aid of a thermal gradient furnace. The samples were fired for 17 hours; the presence of crystals being revealed through observation of the cooled sample with an optical microscope.

A rotating viscosimeter was used in determining the high temperature viscosity of the samples.

The transmission (Trans.) of the glass at 400 nm was determined on polished samples of 2 mm thickness with the aid of a Hewlett Packard Type 8450A spectrophotometer.

Table

| | 1 |
|---|---|
| $SiO_2$ | 27 |
| $B_2O_3$ | 4 |
| $Al_2O_3$ | - |
| $Li_2O$ | - |
| $Na_2O$ | - |
| $K_2O$ | 2 |
| $MgO$ | - |
| $CaO$ | 20 |
| $SrO$ | - |
| $BaO$ | 3 |
| $ZnO$ | - |
| $La_2O_3$ | 20 |
| $ZrO_2$ | 3 |
| $Nb_2O_5$ | 11 |
| $TiO_2$ | 10 |
| $n_d$ | 1.7900 |
| $\nu_d$ | 35.2 |
| $\rho$ | 3.65 |
| A.O. | 0.02 |
| Trans | 80.7 |
| Liq. | ~1125 |

# EP 0 227 269 B1

Table

|  | 2 | 3 | 4 |
|---|---|---|---|
| $SiO_2$ | 22 | 26 | 26 |
| $B_2O_3$ | 7 | 5 | 5 |
| $Al_2O_3$ | - | - | - |
| $Li_2O$ | - | - | - |
| $Na_2O$ | - | - | - |
| $K_2O$ | - | - | - |
| MgO | 2 | 1.5 | - |
| CaO | 20 | 22.1 | 22.7 |
| SrO | - | - | - |
| BaO | - | - | - |
| ZnO | - | - | - |
| $La_2O_3$ | 20 | 18.1 | 19.6 |
| $ZrO_2$ | 3 | 3 | 3 |
| $Nb_2O_5$ | 11 | 13.7 | 13.7 |
| $TiO_2$ | 10 | 10.6 | 10 |
| $Gd_2O_3$ | - | - | - |
| $Y_2O_3$ | 5 | - | - |
| $Ta_2O_5$ | - | - | - |
| $WO_3$ | - | - | - |
| $P_2O_5$ | - | - | - |
| $n_d$ | 1.8082 | 1.8039 | 1.8038 |
| $\nu_d$ | 35.3 | 34.3 | 34.7 |
| $\rho$ | 3.74 | 3.63 | 3.66 |
| A.O. | 0.04 | 0.01 | 0.007 |
| Trans | 79.3 | 79.7 | 80.7 |
| Liq. | ~1200 | ~1170 | ~1165 |

**Claims**

1. A glass for optical and/or ophthalmic applications having an index of refraction between 1.79-1.81, a density less than or equal to 3.75 g/cm$^3$, an Abbe number greater than 33, and a transmission at 400 nm in a thickness of 2mm greater than or equal to 78% characterized in that it consists, expressed in terms of weight percent on the oxide basis, of:

| | | | |
|---|---|---|---|
| $SiO_2$ | 21-30 | BaO | 0-5 |
| $B_2O_3$ | 2-10 | MgO+CaO+SrO+BaO | 18-30 |
| $SiO_2+B_2O_3$ | 24-33 | ZnO | 0-5 |
| $Al_2O_3$ | 0-3 | $La_2O_3$ | 18-22 |
| $Li_2O+Na_2O+K_2O$ | 0-5 | $ZrO_2$ | 1-5 |
| MgO | 0-3 | $Nb_2O_5$ | 6-15 |
| CaO | 15-23 | $TiO_2$ | 5-13 |
| SrO | 0-5 | Other oxides | 0-5 |

2. A method for the production of a glass as claimed in claim 1 characterized in that a glass forming batch appropriate to provide a glass having the constitution specified in claim 1 is melted and a glass formed therefrom.

7

3. A method as claimed in claim 2 characterized in that the batch is melted at approximately 1300°C, the melt heated to 1350-1400°C to homogenize and fine the melt, the heated melt is cooled into a viscosity adequate for casting, cast into the form of a bar and then annealed at 700-750°C with a cooling rate of approximately 60°C/hour.

8